# EUROPEAN PATENT SPECIFICATION

(11) **EP 3 828 051 B1**
(45) Date of publication and mention of the grant of the patent: **05.10.2022**
(21) Application number: 19212371.9
(22) Date of filing: 29.11.2019
(51) Int. Cl.: B60W 50/06, B60W 50/00

(54) **IMPROVING VEHICLE DYNAMICS BY PREDICTING THE LONGITUDINAL ACCELERATION**
VERBESSERUNG DER FAHRZEUGDYNAMIK DURCH VORHERSAGE DER LÄNGSBESCHLEUNIGUNG
AMÉLIORATION DE LA DYNAMIQUE D'UN VÉHICULE PAR PRÉDICTION DE L'ACCÉLÉRATION LONGITUDINALE

(43) Date of publication of application: 02.06.2021
(73) Proprietor: Robert Bosch GmbH, 70442 Stuttgart (DE)
(72) Inventor: Gomori, Gergo, 6000 Kecskemét (HU)

(56) References cited:
- EP-A1- 3 315 373
- WO-A1-03/104056
- DE-A1- 19 654 769
- US-A- 5 477 825

## Description

The present invention relates to a method for operating an acceleration controller of a vehicle and to a device for operating an acceleration controller of a vehicle.

### State of the art

Modern vehicles comprise a plurality of driver assistance systems which help the driver and can carry out at least some of the driving functions of the vehicle. An example is adaptive cruise control (ACC) which automatically adjusts the vehicle speed to maintain a safe distance from further objects or vehicles in front of the ego vehicle. Another example is a traffic jam assist that can help to avoid rear- end conditions.

Many driver assistance systems rely on a vehicle longitudinal control function. For example, actuators such as brakes of a braking system of the vehicle may be controlled to adjust the acceleration of the vehicle in the longitudinal direction. An exemplary driver assistance system with a control device for automatic longitudinal guidance is known from EP 2529993 B1.

WO 03/104056 determines a target for longitudinal acceleration.

For safe driving, the acceleration in the longitudinal direction is adjusted based on the driving situation of the vehicle. The acceleration controller for performing longitudinal control sets a longitudinal force. For example, the acceleration control may adjust the force applied in a hydraulic system for braking the vehicle. It is generally time-consuming to calibrate acceleration controllers, i.e. to get correct relations between the longitudinal force set by the acceleration controller and the resulting longitudinal acceleration of the vehicle. The reason is that there are a lots of parameters which can influence the calibration, such as the mass of the vehicle, friction coefficients between the tires of the vehicle and the road surface, external conditions, temperatures, longitudinal slopes of the road surface, properties of powertrains, brake systems and tires of the vehicle, and the like. Accordingly, lots of experiments have to be carried out and detailed lookup tables must be set up.

### Summary of invention

The invention provides a method for operating an acceleration control of the vehicle as recited in claim 1 and a device for operating an acceleration control of the vehicle as recited in claim 10.

Advantageous embodiments are laid out in the dependent claims.

According to the first aspect, therefore, the invention provides a method for operating an acceleration controller of a vehicle. A value of a longitudinal acceleration of the vehicle is predicted, using a trained machine learning algorithm, based on a longitudinal force set by the acceleration controller. A value of the longitudinal acceleration of the vehicle is measured. The longitudinal force set by the acceleration controller is adjusted, based on the predicted value of the longitudinal acceleration of the vehicle and based on the measured value of the longitudinal acceleration of the vehicle.

According to the second aspect, therefore, the invention provides a device for operating an acceleration controller of a vehicle, comprising an input interface, a computation unit and an output interface. The input interface is adapted to receive a value of a longitudinal force set by the acceleration controller and to receive a measured value of the longitudinal acceleration of the vehicle. The computation unit is adapted to predict a value of a longitudinal acceleration of the vehicle, using a trained machine learning algorithm, based on the received value of the longitudinal force set by the acceleration controller. The computation unit is further adapted to compute an adjusted value of the longitudinal force set by the acceleration controller, based on the predicted value of the longitudinal acceleration of the vehicle and based on the measured value of the longitudinal acceleration of the vehicle. The output interface is adapted to provide the adjusted value of the longitudinal force to the acceleration controller.

The invention can simplify the calibration of the acceleration controller of the vehicle. In particular, the calibration of the acceleration controller can be carried out without the requirement of detailed look-up tables. Moreover, the adjustment of the longitudinal force set by the acceleration controller can be carried out in real time. The measured actual acceleration values serve as feedback values for the controller. By adjusting the longitudinal force set by the acceleration controller, prevention of overshoot can be achieved.

According to an embodiment of the method for operating the acceleration controller of a vehicle, the machine learning algorithm is based on an artificial neural network. In particular, the artificial neural network may be a multi-layer perception neural network.

According to an embodiment of the method for operating the acceleration controller of a vehicle, the machine learning algorithm is trained based on a training set comprising longitudinal forces set by the acceleration controller as an input and real longitudinal accelerations of the vehicle as an output. The training set may be generated based on past drives during the development stage of the vehicle.

According to an embodiment of the method for operating the acceleration controller of a vehicle, predicting the value of the longitudinal acceleration of the vehicle, using a trained machine learning algorithm, is further based on at least one of:
properties of a powertrain of the vehicle, e.g. a combustion engine of the vehicle,
properties of a brake system of the vehicle,
properties of tires of the vehicle,
properties of external conditions, e.g. the quality of the road surface a friction coefficient between the tires of the vehicle and a road surface,
a longitudinal slope of the road surface, and
inertial properties of the vehicle, e.g. a mass of the vehicle.

By taking the above parameters into account, the predicted value is generally more precise, which makes the adjustment of the longitudinal force to converge faster.

According to an embodiment of the method for operating the acceleration controller of a vehicle, the longitudinal force set by the acceleration controller is adjusted based on a deviation of the predicted value of the longitudinal acceleration of the vehicle from the measured value of the longitudinal acceleration of the vehicle. For instance, the adjustment may be proportional to the deviation of the predicted value of the longitudinal acceleration of the vehicle from the measured value of the longitudinal acceleration of the vehicle. The adjustment can also be any other function of said deviation.

According to an embodiment of the method for operating the acceleration controller of a vehicle, the longitudinal force set by the acceleration controller is only adjusted if the deviation of the predicted value of the longitudinal acceleration of the vehicle from the measured value of the longitudinal acceleration of the vehicle exceeds a predetermined threshold. The threshold may also depend on external parameters.

According to an embodiment of the method for operating the acceleration controller of a vehicle, adjusting the longitudinal force set by the acceleration controller is further based on at least one of a longitudinal slope of the road surface, a torque ratio, and a vehicle longitudinal speed.

According to an embodiment of the method for operating the acceleration controller of a vehicle, adjusting the longitudinal force set by the acceleration controller is further based on a vehicle model of the vehicle. Further, the laws of kinetics may be taken into account. Drag forces may be considered, in particular air resistance, climbing resistance and/or rolling resistance both in straight lines and in curves. The inputs to calculate these forces are generally available, i.e. the parameters of the vehicle, actual motion quantities of the vehicle and environmental conditions.

According to an embodiment of the method for operating the acceleration controller of a vehicle, the acceleration controller is pre-calibrated prior to predicting the value of the longitudinal acceleration of the vehicle. However, high precision of pre-calibrating the acceleration control is not required, given that the longitudinal force can be adjusted in real time.

Adjusting the longitudinal force set by the acceleration controller may also comprise adjusting a gradient of the longitudinal force. The learning phase of the trained machine learning algorithm may be done in the application phase of the function. In this way, the mapping of actual properties of the vehicle can be achieved, such as the power unit of the vehicle (e.g. speed versus torque behavior), the brake system of the vehicle (pressure buildup behavior) and other vehicle characteristics of the vehicle (e.g. tire properties).

According to an embodiment of the method for operating the acceleration controller of a vehicle, during a restart of the vehicle, the trained machine learning algorithm is adjusted. For example, weights and biases of the neural network may be modified due to potentially changed vehicle masses, tire properties and environmental conditions such as temperature, air pressure, and the like.

### Brief description of the drawings

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a schematic block diagram of a device for operating an acceleration controller of a vehicle;
- Fig. 2: shows a schematic flow diagram illustrating a method for operating an acceleration controller of a vehicle according to an embodiment of the invention; and
- Fig. 3: shows a schematic flow diagram illustrating a method for operating an acceleration controller of a vehicle according to a further embodiment of the invention.

In the drawings, like, functionally equivalent and identically operating elements, features and components are provided with like reference signs in each case, unless stated other-wise.

### Detailed description of the drawings

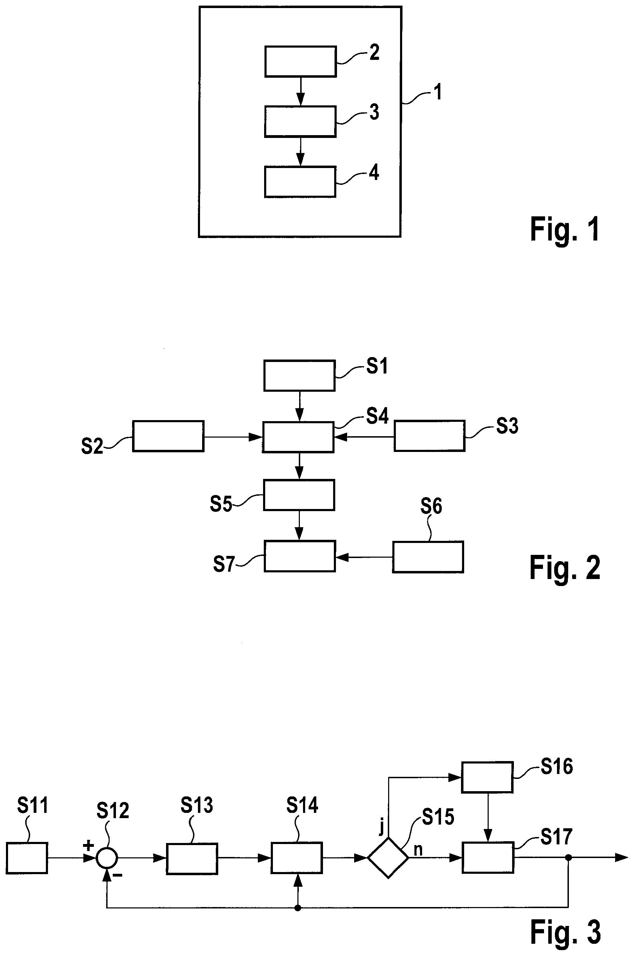

Figure 1 shows a schematic block diagram of a device 1 for operating an acceleration controller of a vehicle. The device 1 comprises an input interface 2, a computation unit 3 and an output interface 4.

The input interface 2 can comprise a cable connection or wireless connection for connection with the acceleration controller. The input interface 2 can also be connected to further components of the vehicle, e.g. sensors or actors, or to further external components.

The input interface 2 receives from said acceleration controller a value of a longitudinal force presently set by the acceleration controller. The input interface 2 further receives a measured value of the longitudinal acceleration of the vehicle.

The computation unit 3 may comprise at least one of a processor, microprocessor, ASIC, integrated current, and the like. Further, the computation unit 3 may comprise or have access to at least one memory. The data received via the input interface 2 may be stored in said memory.

The computation unit 3 predicts a value of a longitudinal acceleration of the vehicle, using a trained machine learning algorithm. The received value of the longitudinal force set by the acceleration controller is used as an input parameter of the trained machine learning algorithm. The machine learning algorithm is trained to predict the value of the longitudinal acceleration of the vehicle. The machine learning algorithm may be trained using supervised learning. For training, a training set may be provided, comprising pairs (x, y) of actual longitudinal forces x set by the acceleration controller corresponding to actual measured longitudinal accelerations y of the vehicle. Each pair (x, y) is generated based on measurements during an actual driving maneuver of the vehicle.

The machine learning algorithm may be based on an artificial neural network, e.g. a multi-layer perception neural network.

For training, additional parameters may be measured and provided. I.e., the input x may comprise the further additional parameters, such as at least one of properties of a powertrain of the vehicle, properties of a brake system of the vehicle, properties of tires of the vehicle, properties of external conditions, a friction coefficient between the tires of the vehicle and a road surface, a longitudinal slope of the road surface, and inertial properties of the vehicle.

Said additional parameters may be provided also during operation to the input interface 2. For example, vehicle sensors of the vehicle may measure at least one of the above parameters and may provide the parameter to the input interface 2 of the device 1. The computation unit 3 is then adapted to predict the value of the longitudinal acceleration of the vehicle also taking the above parameters into account. In other words, the trained machine learning algorithm comprises as input the longitudinal force set by the acceleration controller and, optionally, one or more of the above parameters.

The computation unit 3 is further adapted to compare the predicted value of the longitudinal acceleration of the vehicle with the measured value of the longitudinal acceleration of the vehicle received via the input interface 2. In particular, the computation unit 3 may compute a deviation of the predicted value of the longitudinal acceleration of the vehicle from the measured value of the longitudinal acceleration of the vehicle. If the deviation exceeds a predetermined threshold, the computation unit 3 computes an adjusted value of the longitudinal force set by the acceleration controller. The value of the longitudinal force set by the acceleration controller may be adjusted by a factor which depends on the deviation. The factor may further depend on other parameters, such as a longitudinal slope of the road surface, a torque ratio, and a vehicle longitudinal speed. The adjustment of the longitudinal force is further based on a vehicle model of the vehicle.

The adjusted value of the longitudinal force is provided as output to the acceleration controller via the output interface 4.

According to further embodiments, the device 1 can be a part of the acceleration controller of the vehicle.

Figure 2 shows a schematic flow diagram illustrating a method for operating an acceleration controller of a vehicle. The method may be carried out using a device 1 as described above. Likewise, the method steps illustrated below are also applicable to the device 1 described above.

In a first method step S1, a longitudinal acceleration of the vehicle is measured.

In a second method step S2, the value of the longitudinal force set by the acceleration controller is measured.

In a third method step S3, additional parameters are measured, comprising at least one of properties of a powertrain of the vehicle, properties of a brake system of the vehicle, properties of tires of the vehicle, properties of external conditions, a friction coefficient between the tires of the vehicle and a road surface, a longitudinal slope of the road surface, and inertial properties of the vehicle.

The method steps S1 to S3 can be carried out in an arbitrary order. Preferably, the measurements are performed simultaneously or within a short time period, e.g within several microseconds or milliseconds.

Based on the input provided during steps S1 to S3, a machine learning algorithm is trained, S4. The machine learning algorithm may be based on an artificial neural network. The value of the longitudinal force set by the acceleration controller and the additional parameters are used as input and the measured longitudinal acceleration of the vehicle is used as output of a training set. A plurality of said parameters is measured for different driving conditions. The machine learning algorithm is therefore trained to predict a value of the longitudinal acceleration of the vehicle based on the longitudinal force set by the acceleration controller and based on the additional parameters.

In the following steps, the trained machine learning algorithm is applied during normal operation of the vehicle.

In method step S5, the present longitudinal force set by the acceleration controller is obtained and the trained machine learning algorithm is used to predict a value of the longitudinal acceleration of the vehicle using said longitudinal force set by the acceleration controller as an input. Moreover, one or more of the additional parameters listed above may be measured using vehicle sensors of the vehicle and may be provided is a further input to the trained machine learning algorithm.

In method step S6, a present value of the longitudinal acceleration of the vehicle is measured using vehicle sensors of the vehicle.

In method step S7, the deviation between the predicted value of the longitudinal acceleration of the vehicle and the measured value of the longitudinal acceleration of the vehicle is computed and the longitudinal force set by the acceleration controller is adjusted based on the deviation. Computing the deviation can further be based on a vehicle model of the vehicle and based on the laws of kinetics. The adjustment of the longitudinal force by the acceleration controller may further be based on a longitudinal slope of the road surface, a torque ratio, and a vehicle longitudinal speed. Said parameters may be measured using vehicle sensors of the vehicle.

Adjusting the longitudinal force set by the acceleration controller may only be carried out if the deviation between the predicted value of the longitudinal acceleration of the vehicle and the measured value of the longitudinal acceleration of the vehicle exceeds a predetermined threshold.

Figure 3 shows a schematic flow diagram illustrating a method for operating an acceleration controller of the vehicle.

In a first method step S11, a target acceleration is provided. In method step S12, the measured value of the actual longitudinal acceleration is subtracted from the target acceleration. The resulting error is fed into the controller, S13, which applies a corresponding longitudinal force. The value of the longitudinal acceleration of the vehicle is predicted using the trained machine learning algorithm, S14, based on the longitudinal force set by the acceleration controller and the measured acceleration of the vehicle.

In step S15, it is determined whether the deviation of the predicted value of the longitudinal acceleration of the vehicle from the measured value of the longitudinal acceleration of the vehicle exceeds a predetermined threshold. If this is the case, modification is necessary. In step S16, an adjusted value of the longitudinal force set by the acceleration controller is computed. The modified target force is supplied to the vehicle, S17. If no modification is necessary, the value of the longitudinal force is not altered.

## Claims

1. A method for operating an acceleration controller of a vehicle, comprising the steps:
predicting (S5) a value of a longitudinal acceleration of the vehicle, using a trained machine learning algorithm, based on a longitudinal force set by the acceleration controller;
measuring (S6) a value of the longitudinal acceleration of the vehicle;
adjusting (S7) the longitudinal force set by the acceleration controller, based on the predicted value of the longitudinal acceleration of the vehicle and based on the measured value of the longitudinal acceleration of the vehicle.

2. The method according to claim 1, wherein the machine learning algorithm is based on an artificial neural network.

3. The method according to claim 1 or 2, wherein the machine learning algorithm is trained based on a training set comprising longitudinal forces set by the acceleration controller as an input and real longitudinal accelerations of the vehicle as an output.

4. The method according to any of the preceding claims, wherein predicting the value of the longitudinal acceleration of the vehicle, using the trained machine learning algorithm, is further based on at least one of:
properties of a powertrain of the vehicle,
properties of a brake system of the vehicle,
properties of tires of the vehicle,
properties of external conditions,
a friction coefficient between the tires of the vehicle and a road surface,
a longitudinal slope of the road surface, and
inertial properties of the vehicle.

5. The method according to any of the preceding claims, wherein the longitudinal force set by the acceleration controller is adjusted based on a deviation of the predicted value of the longitudinal acceleration of the vehicle from the measured value of the longitudinal acceleration of the vehicle.

6. The method according to claim 5, wherein the longitudinal force set by the acceleration controller is only adjusted if the deviation of the predicted value of the longitudinal acceleration of the vehicle from the measured value of the longitudinal acceleration of the vehicle exceeds a predetermined threshold.

7. The method according to any of the preceding claims, wherein adjusting the longitudinal force set by the acceleration controller is further based on at least one of a longitudinal slope of the road surface, a torque ratio, and a vehicle longitudinal speed.

8. The method according to any of the preceding claims, wherein adjusting the longitudinal force set by the acceleration controller is further based on a vehicle model of the vehicle.

9. The method according to any of the preceding claims, wherein the acceleration controller is pre-calibrated prior to predicting the value of the longitudinal acceleration of the vehicle.

10. A device (1) for operating an acceleration controller of a vehicle, comprising:
an input interface (2) adapted to receive a value of a longitudinal force set by the acceleration controller and to receive a measured value of the longitudinal acceleration of the vehicle;
a computation unit (3) adapted to:
- predict a value of a longitudinal acceleration of the vehicle, using a trained machine learning algorithm, based on the received value of the longitudinal force set by the acceleration controller;
- compute an adjusted value of the longitudinal force set by the acceleration controller, based on the predicted value of the longitudinal acceleration of the vehicle and based on the measured value of the longitudinal acceleration of the vehicle; and
an output interface (4) adapted to provide the adjusted value of the longitudinal force to the acceleration controller.

## Patentansprüche

1. Verfahren zum Betreiben einer Beschleunigungssteuerung eines Fahrzeugs, umfassend die folgenden Schritte:
Vorhersagen (S5) eines Wertes einer Längsbeschleunigung des Fahrzeugs mithilfe eines trainierten Maschinenlernalgorithmus basierend auf einer durch die Beschleunigungssteuerung eingestellten Längskraft;
Messen (S6) eines Wertes der Längsbeschleunigung des Fahrzeugs;
Anpassen (S7) der durch die Beschleunigungssteuerung eingestellten Längskraft basierend auf dem vorhergesagten Wert der Längsbeschleunigung des Fahrzeugs und basierend auf dem Messwert der Längsbeschleunigung des Fahrzeugs.

2. Verfahren nach Anspruch 1, wobei der Maschinenlernalgorithmus auf einem künstlichen neuronalen Netz basiert.

3. Verfahren nach Anspruch 1 oder 2, wobei der Maschinenlernalgorithmus basierend auf einem Trainingssatz trainiert wird, der durch die Beschleunigungssteuerung eingestellte Längskräfte als eine Eingabe und tatsächliche Längsbeschleunigungen des Fahrzeugs als eine Ausgabe umfasst.

4. Verfahren nach einem der vorhergehenden Ansprüche, wobei das Vorhersagen des Wertes der Längsbeschleunigung des Fahrzeugs mithilfe des trainierten Maschinenlernalgorithmus ferner auf mindestens einem von Folgendem basiert:
Eigenschaften eines Antriebsstrangs des Fahrzeugs,
Eigenschaften eines Bremssystems des Fahrzeugs,
Eigenschaften von Reifen des Fahrzeugs,
Eigenschaften von externen Bedingungen,
einem Reibungskoeffizienten zwischen den Reifen des Fahrzeugs und einer Fahrbahnoberfläche,
einem Längsgefälle der Fahrbahnoberfläche, und
Trägheitseigenschaften des Fahrzeugs.

5. Verfahren nach einem der vorhergehenden Ansprüche, wobei die durch die Beschleunigungssteuerung eingestellte Längskraft basierend auf einer Abweichung des vorhergesagten Wertes der Längsbeschleunigung des Fahrzeugs von dem Messwert der Längsbeschleunigung des Fahrzeugs angepasst wird.

6. Verfahren nach Anspruch 5, wobei die durch die Beschleunigungssteuerung eingestellte Längskraft nur angepasst wird, wenn die Abweichung des vorhergesagten Wertes der Längsbeschleunigung des Fahrzeugs von dem Messwert der Längsbeschleunigung des Fahrzeugs einen vorbestimmten Schwellenwert übersteigt.

7. Verfahren nach einem der vorhergehenden Ansprüche, wobei das Anpassen der durch die Beschleunigungssteuerung eingestellten Längskraft ferner auf mindestens einem eines Längsgefälles der Fahrbahnoberfläche, einem Drehmomentverhältnis und einer Fahrzeuglängsgeschwindigkeit basiert.

8. Verfahren nach einem der vorhergehenden Ansprüche, wobei das Anpassen der durch die Beschleunigungssteuerung eingestellten Längskraft ferner auf einem Fahrzeugmodell des Fahrzeugs basiert.

9. Verfahren nach einem der vorhergehenden Ansprüche, wobei die Beschleunigungssteuerung vor Vorhersagen des Wertes der Längsbeschleunigung des Fahrzeugs vorkalibriert wird.

10. Vorrichtung (1) zum Betreiben einer Beschleunigungssteuerung eines Fahrzeugs, umfassend:
eine Eingabeschnittstelle (2), die dazu ausgelegt ist,
einen Wert einer durch die Beschleunigungssteuerung eingestellten Längskraft zu empfangen und einen Messwert der Längsbeschleunigung des Fahrzeugs zu empfangen;
eine Recheneinheit (3), die zu Folgendem ausgelegt ist:
- Vorhersagen eines Wertes einer Längsbeschleunigung des Fahrzeugs mithilfe eines trainierten Maschinenlernalgorithmus basierend auf dem empfangenen Wert der durch die Beschleunigungssteuerung eingestellten Längskraft;
- Berechnen eines angepassten Wertes der durch die Beschleunigungssteuerung eingestellten Längskraft basierend auf dem vorhergesagten Wert der Längsbeschleunigung des Fahrzeugs und basierend auf dem Messwert der Längsbeschleunigung des Fahrzeugs; und
eine Ausgabeschnittstelle (4), die dazu ausgelegt ist, den angepassten Wert der Längskraft zu der Beschleunigungssteuerung bereitzustellen.

## Revendications

1. Procédé de fonctionnement d'un dispositif de commande d'accélération d'un véhicule, comprenant les étapes de :
prédiction (S5) d'une valeur d'une accélération longitudinale du véhicule, à l'aide d'un algorithme d'apprentissage automatique entraîné, en fonction d'une force longitudinale définie par le dispositif de commande d'accélération ;
mesure (S6) d'une valeur de l'accélération longitudinale du véhicule ;
réglage (S7) de la force longitudinale définie par le dispositif de commande d'accélération, en fonction de la valeur prédite de l'accélération longitudinale du véhicule et en fonction de la valeur mesurée de l'accélération longitudinale du véhicule.

2. Procédé selon la revendication 1, dans lequel l'algorithme d'apprentissage automatique est basé sur un réseau neuronal artificiel.

3. Procédé selon la revendication 1 ou 2, dans lequel l'algorithme d'apprentissage automatique est entraîné en fonction d'un ensemble d'entraînement comprenant des forces longitudinales définies par le dispositif de commande d'accélération comme entrée et des accélérations longitudinales réelles du véhicule comme sortie.

4. Procédé selon l'une quelconque des revendications précédentes, dans lequel la prédiction de la valeur de l'accélération longitudinale du véhicule, à l'aide de l'algorithme d'apprentissage automatique entraîné, est en outre basée sur au moins l'un de ce qui suit :
des propriétés d'un groupe motopropulseur du véhicule,
des propriétés d'un système de freinage du véhicule,
des propriétés de pneus du véhicule,
des propriétés de conditions externes,
un coefficient de frottement entre les pneus du véhicule et une surface de route,
une pente longitudinale de la surface de route, et
des propriétés inertielles du véhicule.

5. Procédé selon l'une quelconque des revendications précédentes, dans lequel la force longitudinale définie par le dispositif de commande d'accélération est réglée en fonction d'un écart entre la valeur prédite de l'accélération longitudinale du véhicule et la valeur mesurée de l'accélération longitudinale du véhicule.

6. Procédé selon la revendication 5, dans lequel la force longitudinale définie par le dispositif de commande d'accélération est réglée uniquement si l'écart entre la valeur prédite de l'accélération longitudinale du véhicule et la valeur mesurée de l'accélération longitudinale du véhicule dépasse un seuil prédéterminé.

7. Procédé selon l'une quelconque des revendications précédentes, dans lequel le réglage de la force longitudinale définie par le dispositif de commande d'accélération est en outre basé sur au moins l'un d'une pente longitudinale de la surface de route, d'un rapport de couple, et d'une vitesse longitudinale de véhicule.

8. Procédé selon l'une quelconque des revendications précédentes, dans lequel le réglage de la force longitudinale définie par le dispositif de commande d'accélération est en outre basé sur un modèle de véhicule du véhicule.

9. Procédé selon l'une quelconque des revendications précédentes, dans lequel le dispositif de commande d'accélération est pré-étalonné avant la prédiction de la valeur de l'accélération longitudinale du véhicule.

10. Dispositif (1) pour actionner un dispositif de commande d'accélération d'un véhicule, comprenant :
une interface d'entrée (2) adaptée pour recevoir une valeur d'une force longitudinale définie par le dispositif de commande d'accélération et pour recevoir une valeur mesurée de l'accélération longitudinale du véhicule ;
une unité de calcul (3) adaptée pour :
- prédire une valeur d'une accélération longitudinale du véhicule, à l'aide d'un algorithme d'apprentissage automatique entraîné, en fonction de la valeur reçue de la force longitudinale définie par le dispositif de commande d'accélération ;
- calculer une valeur réglée de la force longitudinale définie par le dispositif de commande d'accélération, en fonction de la valeur prédite de l'accélération longitudinale du véhicule et en fonction de la valeur mesurée de l'accélération longitudinale du véhicule ; et
- une interface de sortie (4) adaptée pour fournir la valeur réglée de la force longitudinale du dispositif de commande d'accélération.
